# EUROPÄISCHE PATENTANMELDUNG

(11) **EP 0 658 517 A1**
(43) Veröffentlichungstag der Anmeldung: **21.06.1995**
(21) Anmeldenummer: 94118177.8
(22) Anmeldetag: 18.11.1994
(51) Int. Cl.: C02F 5/00, C11D 3/08, C01B 33/20

(54) **Homogene Alkalisilikat/Alkalikarbonat-Mischungen**

(30) Priorität: 23.11.1993 DE 4339803
(71) Anmelder: Degussa Aktiengesellschaft, D-60311 Frankfurt (DE)
(72) Erfinder: Kerner, Dieter, Dr., D-63450 Hanau (DE); Klotz, Oswin, D-63825 Westerngrund (DE); Lortz, Wolfgang, Dr., D-63607 Wächtersbach (DE); Powell, Sigrid, D-63579 Freigericht (DE)

(57) **Zusammenfassung**

Homogene wasserfreie beziehungsweise wasserarme amorphe feste Alklalisilikat/Alkalikarbonat-Mischungen der Zusammensetzung Me₂SiₓO₅ · y Na₂CO₃ · z H₂O, wobei Me Natrium oder Kalium bedeutet und x eine Zahl von 1,5 bis 3, y eine Zahl von 0,025 bis 1 und z eine Zahl von 0 bis 1 ist. Diese Mischungen können zur Enthärtung von Wasser eingesetzt werden.

## Beschreibung

Es ist bekannt, amorphe hydratisierte Alkalisilikate beziehungsweise sprühgetrocknete Wassergläser (US-P 3,912,649) und/oder kristalline schichtförmige Natriumsilikate (DE 34 13 571)oder Zeolithe (DE 24 12 837 C3) zur Wasserenthärtung, insbesondere im Waschprozeß, einzusetzen ( Einsatz als Builder). Im Zuge der immer weiter reduzierten Wassermenge im Waschprozeß und zunehmenden Verwendung möglichst kompakter Waschmittel besteht das Bedürfnis, zum einen eine möglichst aktive Waschmittelkomponente zur Enthärtung des verwendeten Wassers einzusetzen - also mit hoher Wirkstoffkonzentration -, zum anderen soll aber auch eine möglichst hohe Wasserlöslichkeit der verwendeten Wasserenthärtungssubstanzen erreicht werden. Amorphe Alkalisilikate zeigen aber bei Reduzierung des bei der Trocknung immer noch enthaltenen Wassers nach dem Stand der Technik eine drastische Absenkung des Calciumbindevermögens. So lehrt DE 34 13 571 A1 (Seite 12, Zeile 6 bis 13), daß bei 500 °C getemperte Natriumdisilikate nur ein Calciumbindevermögen von kleiner 40 mg CaO/g amorphes Silikat aufweisen. Kristalline schichtförmige Natriumsilikate zeigen zwar bei praktisch völliger Wasserfreiheit ein gutes CaBV, sie sind jedoch erst bei realtiv hohen Temperaturen (ca. 700 °C) mit Kristallisationszeiten von ca. 1 h herstellbar (siehe DE 34 17 649: minimale Kristallisationstemperatur 450 °C, bevorzugt 490 bis 840 °C, Beispiele 1 - 3; 11 h bei 700 °C, Beispiele 3 - 4: 17 h bei 550 °C, DE 37 18 350: 500 - 800 °C, alle Beispiele bei Temperaturen zwischen 720 und 750 °C, DE 40 00 705: 600 - 800 °C, DE 41 07 230: 500 - 850 °C, Beispiele 730 °C). Desweiteren führt die hohe Kristallisationstemperatur zu einem Verbacken und Versintern des Produktes, was einen nachfolgenden aufwendigen Vermahlungsschritt notwenig macht (siehe DE 37 18 350, DE 41 07 230).

Aus EP 0 486 078 und DE-OS 22 29 985 ist zwar die Herstellung und der Einsatz von homogenen wasserhaltigen (EP 0 486 078: 14 - 22 % Wasser, DE-OS 22 29 985: Tabelle 3, Versuch Nr. 1, entsprechend 21,4 % Na₂CO₃ bezogen auf die Summe von Na₂Si₂O₅ + Na₂CO₃ eine Sprühtrocknerauslaßtemperatur von 120 °C) Natriumsilikat/Soda Mischungen als Builder bekannt, wie dies auch für die reinen Natriumsilikate bekannt ist (zum Beispiel Protil®A der Firma Henkel oder die Sikalon®D-Typen der Firma Woellner), an keiner Stelle ist jedoch erläutert, daß die Temperung von Natrimsilikat/Soda Mischungen möglich ist, ohne daß, wie allgemein bekannt, ein Absinken des CaBV befürchtet werden muß.

Bei DE-OS 22 29 985 ist weiterhin auch die Herstellung und Verwendung von homogenen Natriumsilikat/Natriumsulfat-Mischungen beschrieben. Bei der Temperung (siehe Vergleichsbeispiel 2) derartiger Mischungen ist, wie beim reinen Natriumdisilikat, ein drastischer Abfall des CaBV zu sehen, der zwar nicht ganz so ausgeprägt ist, aber der erreichte niedrige CaBV ist für den Einsatz als Builder nur bedingt geeignet.

Es konnte nun überraschend gezeigt werden, daß durch eine homogene Dotierung von amorphen wasserfreien bzw. wasserarmen Alkalisilikaten mit Alkalikarbonat ein sehr gutes Ca- bzw. Mg-Bindevermögen und eine gute Wasserlöslichkeit bzw. Lösungsgeschwindigkeit trotz weitgehender Wasserfreiheit erreicht werden kann. Als Alkaliverbindungen können sowohl die Natrium- als auch die Kaliumverbindungen eingesetzt werden. Die Natriumverbindungen werden in der Technik, insbesondere aufgrund der günstigeren Rohstoffkosten, verwendet.

Gegenstand der Erfindung sind homogene wasserfreie beziehungsweise wasserarme amorphe feste Alkalisilikat/Alkalikarbonat-Mischungen, welche dadurch gekennzeichnet sind, daß sie folgende Zusammensetzung

Me₂SiₓO₅ · y Na₂CO₃ · z H₂O,

wobei
- Me: = Na, K
- x: = 1,5 - 3
- y: = 0,025 - 1
- z: = 0 - 1
aufweisen und ein nach der in der Beschreibung angegebenen Bestimmungsmethoden bei 20 °C ermitteltes Calciumbindevermögen von wenigstens 50 mg CaO/g wasserfreier Aktivsubstanz aufweisen.

Ein weiterer Gegenstand der Erfindung ist ein Verfahren zur Herstellung der homogenen Silikat/Karbonat-Mischungen, welches dadurch gekennzeichnet ist, daß man durch Auflösen von Alkalikarbonat oder Alkalihydrogenkarbonat beziehungsweise Zugabe von Alkalikarbonat- oder Alkalihydrogenkarbonatlösungen in beziehungsweise zu Aikalisilikatlösungen eine homogene Lösung der genannten Silikat/Karbonat-Verhältnisse einstellt, die erhaltene Lösung in ein festes Produkt überführt und dieses feste Produkt bei einer Temperatur von 200 bis 550 °C so lange tempert, bis der genannte Wassergehalt erreicht ist.

In einer Ausführungsform der Erfindung kann man die Trocknung der Silikat/Karbonatlösung durch Sprühtrocknung erreichen und das sprühgetrocknete pulverförmige homogene Alkalisilikat/Karbonat-Gemisch in einer Temperzone mit bewegter Pulverschicht bei Temperaturen von 200 bis 550 °C so lange tempern, bis der genannte Wassergehalt erreicht ist, und gegebenenfalls zum Erreichen einer besonderen Produktfeinheit das eventuell leicht verbackene Temperprodukt vermahlen.

Das getemperte pulverförmige Produkt kann eine Primärteilchengröße von 95 % kleiner 100 µm aufweisen.

Die erfindungsgemäße Mischung kann zur Enthärtung von Wasser, das Calcium- und/oder Magnesiumionen enthält, eingesetzt werden. Diese Verwendung kann man durchführen, indem man dem Wasser die erfindungsgemäße Mischung zufügt.

Dabei kann man die Mischung in Kombination mit anderen Wasserenthärtungsmitteln einsetzen.

Das Calciumbindevermögen (CaBV) gibt die von 1 g Produkt (bezogen auf die "wasserfreie Substanz; der Wassergehalt der mit Natriumcarbonat dotierten Natriumsilikate wird durch Trocknung bei 400 °C bis zur Gewichtskonstanz ermittelt) aus einem Liter wäßriger CaCl₂-Lösung von 30 °dH (30 °Deutsche Härte entspricht 300 mg CaO/l bzw. 594 mg CaCl₂/l) gebundene Menge Calciumionen in Milligramm Calciumoxid an. Zur Bestimmung des CaBV wird 1 l der wäßrigen CaCl₂-Lösung, die mit verdünnter Natronlauge auf einen pH-Wert von 10 eingestellt wurde, mit 1 g Substanz (bezogen auf "wasserfrei") versetzt. Die gebildete Suspension wird anschließend 10 Minuten bei Raumtemperatur kräftig gerührt, filtriert und im Filtrat durch komplexometrische Tittration mittels Ethylendiamintetraessigsäure der CaO-Gehalt ermittelt. Das CaBV ist das zehnfache der Differenz der ermittelten °dH.

Der amorphe Charakter der erzielten Produkte wird durch Röntgendiffraktometrie ermittelt.

Der Glühverlust beschreibt den Massenverlust in Gewichtsprozent nach 1 stündigem Glühen bei 1000 °C. Der Glühverlust ist Summe aus dem verdampfenden Wasseranteil und dem freiwerdenden CO₂ nach Reaktion des Na₂CO₃ mit der Natriumsilikatmatrix.

### Vergleichsbeispiel 1: Reines Natriumsilikat mit einem SiO₂/Na₂O-Verhältnis gleich 2,0

Wasserglas mit einem Gehalt von 333 g SiO₂/l, 172 g Na₂O/l und einer Dichte von 1,41 kg/l (SiO₂/Na₂O-Verhältnis gleich 2,0) wird mit Hilfe eines Sprühtrockners (Niro Atomizer Modell: Minor Production) bei einer Zulufttemperatur von 260 °C, einer Ablufttemperatur von 100 °C, einer Flüssigkeitsdosierung von 25 l/h und einer Zerstäuberdrehzahl von 24000 Upm versprüht. Das erhaltene Pulver wird in einem Drehrohrofen der Firma Smithovens Nijmwegen, Typ Holec, ausgestattet mit 3 Heizzonen auf einer Länge von 1,35 m, einer Gesamtlänge von 2,75 und einem Rohrdurchmesser von 0,15 m, einer Rohrneigung von 2°, einer Drehzahl von 3 U/min und einer Dosiermenge von 750 g/h bei unterschiedlichen Temperaturen getempert und der Wassergehalt, das Calciumbindevermögen und der amorphe/kristalline Charakter ermittelt (siehe Tabelle):

| | ungetempert | 100 °C | 300 °C | 400 °C | 500 °C | 600 °C | 700 °C |
|---|---|---|---|---|---|---|---|
| Wassergehalt | 16,7 | 13,0 | 3,5 | 2,3 | 0,8 | 0,7 | 0,6 |
| CaBV | 180 | 164 | 23 | 14 | 3,3 | 142 | 127 |

Die Produkte, die bis zu einer Temperatur von 500 °C getempert wurden, weisen einen röntgenamorphen Charakter auf. Bei diesen amorphen Produkten sinkt das CaBV mit abnehmendem Wassergehalt. Die Produkte, die bei einer Tempertemperatur von 600 ° und 700 °C erhalten wurden, sind kristalline Schichtsilikate, wie sie unter anderem bei DE 34 13 571 beschrieben wurden und haben wieder ein entsprechend gutes Calciumbindevermögen.

### Vergleichsbeispiel 2: Homogene Natriumsilikat/Natriumsulfat-Mischungen

In 30 l Wasserglas mit einem Gehalt von 333 g SiO₂/l, 172 g Na₂O/l und einer Dichte von 1,41 kg/l (SiO₂/Na₂O-Verhältnis gleich 2,0) werden zunehmende Mengen Na₂SO₄ gelöst, so daß sich ein prozentualer Gewichtsanteil von 5 % und 15 % Na₂SO₄ ergibt. Zum leichteren Lösen des Natriumsulfates wird auf ca. 80 °C erwärmt. Die Lösung wird mit Hilfe eines Sprühtrockners (Niro Atomizer Model: Minor Production) bei einer Zulufttemperatur von 260 °C, einer Ablufttemperatur von 100 °C, einer Flüssigkeitsdosierung von 25 l/h und einer Zerstäuberdrehzahl von 24000 Upm versprüht. Die erhaltenen Pulver werden in einem Drehrohrofen der Firma Smithovens Nijmwegen, Typ Holec, ausgestattet mit 3 Heizzonen auf einer Länge von 1,35 m, einer Gesamtlänge von 2,75 und einem Rohrdurchmesser von 0,15 m, einer Rohrneigung von 2 °, einer Drehzahl von 3 U/min und einer Dosiermenge von 750 g/h bei 300 °C getempert und der Glühverlust, der Wassergehalt und das Calciumbindevermögen ermittelt (siehe Tabelle):

| bei 300 °C getempert | | | |
|---|---|---|---|
| Na₂SO₄-Gehalt in Gew.-% | GV | Wassergehalt | CaBV |
| 0 | 5,0 | 5,0 | 24 |
| 5 | 2,8 | 2,5 | 53 |
| 15 | 2,7 | 1,9 | 74 |

### Beispiele (SiO₂/Na₂O-Verhältnis gleich 1,8)

In 30 l Wasserglas mit einem Gehalt von 306 g SiO₂/l, 176 g Na₂O/l und einer Dichte von 1,40 kg/l (SiO₂/Na₂O-Verhältnis gleich 1,8) werden zunehmende Mengen Na₂CO₃ gelöst, so daß sich ein prozentualer Gewichtsanteil von 5 %, 10 %, 15 %, 20 % und 30 % Na₂CO₃ ergibt. Zum leichteren Lösen der Soda wird auf ca. 80 °C erwärmt. Die Lösung wird mit Hilfe eines Sprühtrockners (Niro Atomizer Model: Minor Production) bei einer Zulufttemperatur von 260 °C, einer Ablufttemperatur von 100 °C, einer Flüssigkeitsdosierung von 25 l/h und einer Zerstäuberdrehzahl von 24000 Upm versprüht. Die erhaltene Pulver werden in einem Drehrohrofen der Firma Smithovens Nijmwegen, Typ Holec, ausgestattet mit 3 Heizzonen auf einer Länge von 1,35 m, einer Gesamtlänge von 2,75 und einem Rohrdurchmesser von 0,15 m, einer Rohrneigung von 2 °, einer Drehzahl von 3 U/min und einer Dosiermenge von 750 g/h bei unterschiedlichen Temperaturen getempert und der Wassergehalt, das Calciumbindevermögen und der amorphe/kristalline Charakter ermittelt (siehe Tabelle):

| bei 300 °C getempert | | | |
|---|---|---|---|
| Na₂CO₃-Gehalt in Gew.-% | GV | Wassergehalt | CaBV |
| 0 | 3,3 | 3,3 | 18 |
| 5 | 6,3 | 3,9 | 35 |
| 10 | 6,4 | 1,2 | 84 |
| 15 | 7,4 | 1,1 | 141 |
| 20 | 9,0 | 0,6 | 161 |
| 30 | 12,9 | 0,2 | 186 |

| bei 400 °C getempert | | | |
|---|---|---|---|
| Na₂CO₃-Gehalt in Gew.-% | GV | Wassergehalt | CaBV |
| 0 | 1,7 | 1,7 | 18 |
| 5 | 3,2 | 0,7 | 36 |
| 10 | 5,3 | 0,7 | 87 |
| 15 | 7,1 | 0,8 | 143 |
| 20 | 8,6 | 0,3 | 171 |
| 30 | 12,6 | 0,2 | 188 |

Bei keinem der Produkte konnten kristalline Schichtsilikate röntgenographisch nachgewiesen werden. Die Produkte mit einem hohen Na₂CO₃-Anteil zeigen als einzige kristalline Substanz Anteile von kristallisiertem Na₂CO₃.

### Beispiele (SiO₂/Na₂O-Verhältnis gleich 2,0)

In 30 l Wasserglas mit einem Gehalt von 333 g SiO₂/l, 172 g Na₂O/l und einer Dichte von 1,41 kg/l (SiO₂/Na₂O-Verhältnis gleich 2,0) werden zunehmende Mengen Na₂CO₃ gelöst, so daß sich ein prozentualer Gewichtsanteil von 5 %, 10 %, 15 %, 20 % und 30 % Na₂CO₃ ergibt. Zum leichteren Lösen der Soda wird auf ca. 80 °C erwärmt. Die Lösung wird mit Hilfe eines Sprühtrockners (Niro Atomizer Modell: Minor Production) bei einer Zulufttemperatur von 260 °C, einer Ablufttemperatur von 100 °C, einer Flüssigkeitsdosierung von 25 l/h und einer Zerstäuberdrehzahl von 24000 Upm versprüht. Die erhaltene Pulver werden in einem Drehrohrofen der Firma Smithovens Nijmwegen, Typ Holec, ausgestattet mit 3 Heizzonen auf einer Länge von 1,35 m, einer Gesamtlänge von 2,75 und einem Rohrdurchmesser von 0,15 m, einer Rohrneigung von 2 °, einer Drehzahl von 3 U/min und einer Dosiermenge von 750 g/h bei uterschiediichen Temperaturen getempert und der Wassergehalt, das Calciumbindevermögen und der amorphe/kristalline Charakter ermittelt (siehe Tabelle):

| bei 100 °C getempert | | | |
|---|---|---|---|
| Na₂CO₃-Gehalt in Gew.-% | GV | Wassergehalt | CaBV |
| 15 | 16,1 | 9,9 | 170 |

| bei 300 °C getempert | | | |
|---|---|---|---|
| Na₂CO₃-Gehalt in Gew.-% | GV | Wassergehalt | CaBV |
| 0 | 3,0 | 3,0 | 16 |
| 5 | 6,0 | 3,5 | 32 |
| 10 | 6,2 | 1,3 | 79 |
| 15 | 7,2 | 0,9 | 140 |
| 20 | 8,6 | 0,3 | 159 |
| 30 | 12,7 | 0,2 | 181 |

| bei 400 °C getempert | | | |
|---|---|---|---|
| Na₂CO₃-Gehalt in Gew.-% | GV | Wassergehalt | CaBV |
| 0 | 1,5 | 1,5 | 18 |
| 5 | 3,0 | 0,6 | 35 |
| 10 | 5,4 | 0,5 | 84 |
| 15 | 6,9 | 0,7 | 143 |
| 20 | 8,5 | 0,2 | 169 |
| 30 | 12,7 | 0,2 | 186 |

Bei keinem der Produkte konnten kristalline Schichtsilikate röntgenographisch nachgewiesen werden. Die Produkte mit einem hohen Na₂CO₃-Anteil zeigen als einzige kristalline Substanz Anteile von kristallisiertem Na₂CO₃.

## Patentansprüche

1. Homogene wasserfreie beziehungsweise wasserarme amorphe feste Alkalisilikat/Alkalikarbonat-Mischung, dadurch gekennzeichnet, daß sie folgende Zusammensetzung
Me₂SiₓO₅ · y Na₂CO₃ · z H₂O,
wobei
Me = Na, K
x = 1,5 - 3
y = 0,025 - 1
z = 0 - 1
aufweisen und ein nach der in der Beschreibung angegebenen Bestimmungsmethoden bei 20 °C ermitteltes Calciumbindevermögen von wenigstens 50 mg CaO/g wasserfreier Aktivsubstanz aufweisen.

2. Verfahren zur Herstellung von homogenen Silikat/Karbonat-Mischungen nach Anspruch 1, dadurch gekennzeichnet, daß man durch Auflösen von Alkalikarbonat oder Alkalihydrogenkarbonat beziehungsweise Zugabe von Alkalikarbonat- oder Alkalihydrogenkarbonatlösungen in beziehungsweise zu Alkalisilikatlösungen eine homogene Lösung der genannten Silikat/Karbonat-Verhältnisse einstellt, die erhaltene Lösung in ein festes Produkt überführt und dieses feste Produkt bei einer Temperatur von 200 bis 550 °C so lange tempert, bis der genannte Wassergehalt erreicht ist.

3. Verfahren nach Anspruch 2, dadurch gekennzeichnet, daß man die Trocknung der Silikat/Karbonatlösung durch Sprühtrocknung erreicht und das sprühgetrocknete pulverförmige homogene Alkalisilikat/Karbonat-Gemisch in einer Temperzone mit bewegter Pulverschicht bei Temperaturen von 200 bis 550 °C so lange tempert, bis der genannte Wassergehalt erreicht ist, und gegebenenfalls zum Erreichen einer besonderen Produktfeinheit das eventuell leicht verbackene Temperprodukt vermahlt.

4. Verfahren nach Anspruch 2 oder 3, dadurch gekennzeichnet, daß das getemperte pulverförmige Produkt eine Primärteilchengröße von 95 % kleiner 100 µm aufweist.

5. Verwendung der Mischung nach Anspruch 1 zur Enthärtung von Wasser, das Calcium- und/oder Magnesiumionen enthält.

6. Verfahren zur Enthärtung von Wasser, das Calcium und/oder Magnesium-Ionen enthält, dadurch gekennzeichnet, daß man dem Wasser eine Mischung nach Anspruch 1 zufügt.

7. Verfahren nach Anspruch 6, dadurch gekennzeichnet, daß man die Mischung gemäß Anspruch 1 in Kombination mit anderen Wasserenthärtungsmitteln einsetzt.
